**Europäisches Patentamt**

**European Patent Office**

**Office européen des brevets**

(19)

(11) Veröffentlichungsnummer: **0 257 313**
**A2**

(12) **EUROPÄISCHE PATENTANMELDUNG**

(21) Anmeldenummer: 87110736.3

(22) Anmeldetag: 24.07.87

(51) Int. Cl.4: **G02B 23/12**

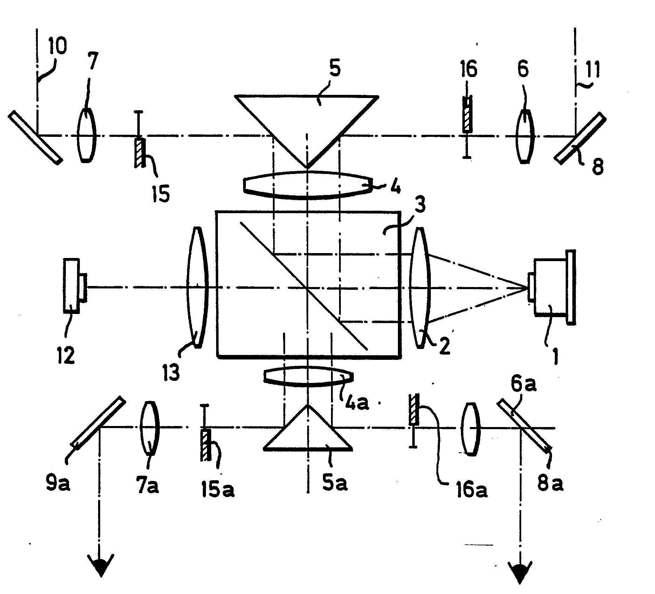

Ein Antrag gemäss Regel 88 EPÜ auf Berichtigung der Seite 2 und der Zeichnung liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: 29.08.86 DE 3629458

(43) Veröffentlichungstag der Anmeldung:
02.03.88 Patentblatt 88/09

(84) Benannte Vertragsstaaten:
**AT CH DE FR GB LI NL**

(71) Anmelder: **Firma Carl Zeiss**

**D-7920 Heidenheim (Brenz)(DE)**

Anmelder: **CARL ZEISS-STIFTUNG HANDELND ALS CARL ZEISS**

**D-7920 Heidenheim (Brenz)(DE)**

(72) Erfinder: **Marx, Dieter**
**Neuffenweg 18**
**D-7080 Aalen-Waldhausen(DE)**

(54) **Stereoskopisches Wärmebildgerät.**

(57) Es wird ein kleinbauendes stereoskopisches IR-Sichtgerät angegeben, das aus einem Wärmebildgerät besteht, dem zwei binokulare Fernrohre vorgeschaltet sind. Eines der beiden Fernrohre bildet eine IR-Szene in zwei Zwischenbildern ab, die sich geringfügig in der Perspektive unterscheiden. Auf dem Detektor des Wärmebildgerätes werden diese Bilder durch Blenden so getrennt, daß ein Beobachter durch ein zweites binokulares Fernrohr die Szene perspektivisch wahrnimmt.

EP 0 257 313 A2

## Stereoskopisches Wärmebildgerät

Die Erfindung betrifft ein stereoskopisches Wärmebildgerät, das aus einem Detektor, einem IR-Objektiv und einem Scannersystem sowie aus je einem binokularen Fernrohrsystem für die Bildaufnahme und Wiedergabe besteht.

Derartige stereoskopische Wärmebildgeräte sind beispielsweise aus der PCT-Anmeldung Nr. WO 84-03777 bekannt. Bei diesem bekannten stereoskopischen Wärmebildgerät wird die Trennung der beiden optischen Kanäle derart vorgenommen, daß dem Detektor abwechselnd das Bild des rechten und des linken Optikkanals angeboten wird. Die Trennung der beiden Kanäle für die Bildwiedergabe erfolgt in einer Elektronik, die die Signale getrennt weiterverarbeitet.

Der Erfindung liegt die Aufgabe zugrunde, die Beaufschlagung des Detektors mit den beiden stereoskopischen Halbbildern sowie die Trennung der beiden optischen Kanäle fur die Wiedergabe zu vereinfachen.

Diese Aufgabe wird erfindungsgemäß dadurch gelöst, daß einer Detektorhälfte das Bild des einen Optikkanals und der anderen Detektorhälfte das Bild des anderen Optikkanals dargeboten wird, und daß die Fernrohrsysteme für die Bildaufnahme und Bildwiedergabe ein jeweils beiden Optikkanälen gemeinsames Hauptobjektiv (4,4a) und ein Teilerprisma (5,5a) enthalten und daß im rechten und im linken Optikkanal eines jeden Fernrohrsystems ein weiteres Objektiv (6,7,6a,7a) und mindestens ein Umlenkspiegel (8,9,8a,9a) vorgesehen sind.

Zur Wiedergabe der IR-Bilder sind zweckmäßigerweise Leuchtdioden vorgesehen, deren Bild über ein vor der Diode angeordnetes Objektiv und einen Scan-Spiegel ins Unendliche abgebildet wird.

Die mit der Erfindung erzielten Vorteile bestehen insbesondere in der damit möglichen kleinen Bauweise fur ein binokulares Sichtgerät für stereoskopische Betrachtung im IR-Bereich.

Ein Ausführungsbeispiel der Erfindung ist in der Zeichnung dargestellt und wird im folgenden näher beschrieben. Die einzige Figur zeigt den - schematischen Strahlengang mit den wesentlichen optischen Teilen. In dieser schematischen Darstellung ist mit (4) das Hauptobjektiv für das bildaufnehmende Fernrohrsystem bezeichnet. Das Teilerprisma (5) erzeugt eine Pupillenteilung des IR-Bündels. Daraus resultieren für das Objektiv (4) zwei Bildebenen, in denen eine Abbildung der Detektorzeile bzw. der IR-Szene entsteht. Diese Zwischenbilder werden durch die Objektive (6,7) der Optikkanäle nach Umlenkung durch die Spiegel (8,9) ins Unendliche abgebildet. Bedingt durch den räumlichen Abstand der beiden optischen Achsen (10) und (11) unterscheiden sich diese Zwischenbilder geringfügig in der Perspektive. Wurden beide Zwischenbilder gemeinsam auf dem Detektor (1) abgebildet, so würde trotzdem kein räumliches Bild entstehen, da der Detektor die beiden Bilder nicht unterscheiden kann. Zur Trennung dieser beiden Bilder auf dem Detektor deckt man beispielsweise bei einem 120-zeiligen Wärmebildgerät die Zeilen 1-60 im rechten Kanal und die Zeilen 61-120 im linken Kanal ab. Werden nun die beiden Spiegel (8) und (9) so justiert, daß die beiden optischen Achsen genau parallel verlaufen, so werden den beiden Detektorgruppen perspektivisch unterschiedliche Bilder der gleichen IR-Szene zugeführt. Die Wiedergabe der IR-Bilder erfolgt in der Weise, daß das Bild der Leuchtdioden (12) uber das Objektiv (13) und den Scan-Spiegel (3) ins Unendliche abgebildet wird. Wie im Aufnahmekanal, so erfolgt nun auch im Wiedergabekanal eine Pupillenteilung nach dem Objektiv (4a). In den Zwischenbildebenen werden wiederum die Hälften der Zeilen abgedeckt, so daß das linke Okular (7a) nur die Zeilen 1 bis 60 (1 bis n), das rechte Okular nur die Zeilen 61 bis 120 (n + 1 bis 2n) sieht. Auch hier gilt, daß mittels der beiden Spiegel (9a) und (8a) die beiden Strahlengänge genau parallel justiert werden. Blickt man nun in die beiden Okulare, so entsteht der Eindruck eines räumlichen Bildes.

## Ansprüche

1. Stereoskopisches Wärmebildgerät, bestehend aus einem Detektor (1), einem IR-Objektiv (2), einem Scanner-System (3) und je einem binokularen Fernrohrsystem fur die Bildaufnahme und Wiedergabe, dadurch gekennzeichnet, daß der Detektor (1) derart unterteilt ist, daß eine Detektorhälfte das Bild des linken Optikkanals und die andere Detektorhälfte das Bild des rechten Optikkanals des binokularen Fernrohrsystems für die Bildaufnahme sieht.

2. Stereoskopisches Wärmebildgerät, dadurch gekennzeichnet, daß die Fernrohrsysteme ein beiden Optikkanälen gemeinsames Objektiv (4, 4a) und je ein Teilerprisma (5, 5a) enthalten und daß im rechten und im linken Optikkanal eines jeden Fernrohrsystems ein weiteres Objektiv (6,7,6a,7a) und mindestens ein Umlenkspiegel (8,9,8a,9a) vorgesehen sind.

3. Stereoskopisches Wärmebildgerät nach Anspruch 2, dadurch gekennzeichnet, daß zur Wiedergabe der IR-Bilder Leuchtdioden (12) vorgesehen sind, deren Bild über ein Objektiv (13) und einen Scan-Spiegel (3) ins Unendliche abgebildet wird.

West Germany
Carl Zeiss
Oberkochen

Carl Zeiss   Postfach 13 69/13 80   7082 Oberkochen

**An das
Europäische Patentamt
Erhardtstraße 27**

**8000 München 2**

Postfach 1369/1380
7082 Oberkochen
Telefon (0 73 64) 20-0
Telex 7 1375 155
Telefax 0 73 64 - 68 08

| Ihre Zeichen | Ihre Nachricht | Unsere Zeichen | Telefon Durchwahl | Telex Durchwahl | Datum |
|---|---|---|---|---|---|
| | | **86038 P EP** (0 73 64) 20**3447** | 713751..... | | **20. August 1987** |
| | | **Pat/Brd/Bit** | | | |

**A.Z.: 87110736.3
Anm.: Firma Carl Zeiss
u.A.: 86038 P EP**

**Berichtigung der Zeichnung und eines Schreibfehlers**

In der mit dem Antrag auf Erteilung eines europäischen Patentes eingereichten Zeichnung sind zwei Fehler bei den Bezugszeichen unterlaufen. Die Bezeichnung "6a" für das Objektiv im rechten Teil des Wiedergabekanals wurde versehentlich dem Spiegel "8a" zugeordnet und das Bezugszeichen "9" für den bei der optischen Achse "10" angeordneten Spiegel wurde vergessen. Es wird eine neue Zeichnung mit richtig gestellten Bezugszeichen eingereicht, welche die fehlerhafte Zeichnung ersetzen soll.

Im Text der Beschreibung fehlt auf Seite 2 der Hinweis auf die in der Zeichnung mit "15" und "16" und mit "15a" und "16a" bezeichneten Blenden. Dieser Hinweis ist in der neu eingereichten Seite 2 in den Zeilen 25 und 26 sowie 35 und 36 eingefügt.

**Carl Zeiss
Allg. Vollmacht Nr. 8**

*G. Breitschwerd*

**(Dipl.-Phys.G.Breitschwerd)**

**Anlagen: neue Seite 2 (dreifach)
         neue Zeichnung (dreifach)**

Der Vorstand:
Wolfgang Adolphs
Prof. Dr.-Ing. Jobst Herrmann
Dr. Gert Littmann
Gustav Pieper
Dr. Horst Skoludek

Banken:
Deutsche Bank AG, Heidenheim,
Konto 2 125 367 (BLZ 613 700 86)
Commerzbank Heidenheim
Konto 2 011 112 (BLZ 632 400 16)

Dresdner Bank Aalen
Konto 5 843 200 (BLZ 614 800 01)
Postgiroamt: Stuttgart 2 015-705
(BLZ 600 100 70)